# EUROPEAN PATENT SPECIFICATION

(11) **EP 4 601 887 B1**
(45) Date of publication and mention of the grant of the patent: **02.12.2026**
(21) Application number: 23789922.4
(22) Date of filing: 12.10.2023
(51) Int. Cl.: B60C 25/05, B60C 19/00, B60C 23/04

(54) **WHEEL ASSEMBLY FOR A VEHICLE**
RADANORDNUNG FÜR EIN FAHRZEUG
ENSEMBLE ROUE POUR VÉHICULE

(30) Priority: 14.10.2022 SE 2251207
(43) Date of publication of application: 20.08.2025
(73) Proprietor: Fyrqom AB, 435 37 Mölnlycke (SE)
(72) Inventor: IUSTIN, Roman, 435 37 Mölnlycke (SE)
(74) Representative: Zacco Sweden AB
(86) International application number: PCT/EP2023/078289
(87) International publication number: WO 2024/079239

(56) References cited:
- EP-A2- 1 769 948
- JP-A- 2012 126 341
- US-A1- 2004 084 517
- US-A1- 2004 164 140

## Description

### TECHNICAL FIELD

Embodiments herein relate in general to wheel assembly for a vehicle. In particular, embodiments and aspects of the present invention relate to a tire fitting system and a method performed by a tire fitting system for enabling identification of a wheel prior to assembly of the wheel on a vehicle. Further, the embodiments herein also relate to a computer program product for performing the method and computer program product carrier.

### BACKGROUND

In vehicles today, in particular heavy-duty vehicles such as semi-trailer vehicles or trucks for cargo transport, one or more central electronic control units, ECUs, may be implemented on-board the vehicle in order to read and collect sensor readings from various types of wheel sensors on-board the vehicle. Wheel sensors may typically include tire sensors which may be located in or on the tires or rims of the wheels of the vehicle. The sensor information data transmitted from these sensors may comprise, for example, tire pressures, tire temperatures, tire deformations, the identities of the sensors, etc. These types of systems are conventionally referred to as Tire Pressure Monitoring Systems, TPMS, or Tire Health Systems, THS. These systems also normally employ radio frequency transmissions for transmitting its sensor data to, e.g. the ECU or external sensor data receivers. In additional to such TPMS/THS systems, wheel sensors may further comprise Radio Frequency Identification, RFID, sensors, i.e. RFID tags, integrated or mounted on the tire and/or rim of a wheel. Such systems are known from US2004/164140 A1, JP2012126341 A, US2004/084517 A1 and EP1769948 A1.

Prior to wheel assembly i.e. mounting the wheels on a vehicle, typically a tire fitting system comprised in a tire fitting station performs the task of fitting tires to their respective rims for each wheel. Afterwards, the fitted wheels are packaged in the fitting station and transported to a wheel assembly station. In the wheel assembly station, each fitted wheel is mounted onto a specific wheel-location on the vehicle. It is of outmost importance that each fitted wheel is mounted onto its specific corresponding wheel-location on the vehicle. Specifically, vehicles such as heavy-duty vehicles comprising trailers, may have up to 18 wheels or more, and errors in the wheel assembly process may adversely affect the performance and safety of the vehicles on the road. Furthermore, wheel assembly errors usually result in time-consuming and costly trouble shooting attempts.

Therefore, there is a need in the art for robust, flexible, accurate and efficient systems and methods for ensuring faultless wheel assembly on a vehicle.

### SUMMARY

It is an object of embodiments of the present invention to provide a tire fitting system and methods performed by the tire fitting system, along with computer program products and carriers, for enabling identification of a wheel prior to assembly of the wheel on a vehicle, thus alleviating, or eliminate all or at least some of the above-discussed drawbacks of presently known solutions.

These objects are achieved by means of a system, a tire fitting station comprising such a control system, a method, and computer program products and carriers, as defined in the appended independent claims. The term exemplary is in the present context to be understood as serving as an instance, example or illustration.

According to a first aspect of the present disclosure, there is provided a method performed by a tire-fitting system for enabling identification of a wheel to be mounted onto a vehicle. The method comprises obtaining sensor information comprising an identity of a wheel sensor located on a corresponding rim and/or in a corresponding tire of the wheel. Further, the method comprises obtaining wheel-assembly information comprising a predetermined location of the wheel and a predetermined fitting-order of the wheel on the vehicle. The method further comprises associating the obtained sensor information to the obtained wheel-assembly information.

The present inventor has thus realized that by obtaining and associating sensor information comprising the sensor identity for the wheel sensor of each wheel, to the wheel assembly information, the exact wheel location and the fitting order of each specific wheel on the vehicle can be accurately determined. Thus, by the inventive method and systems thereto it is ensured with high accuracy that the right wheel is assembled to the right wheel location and in the correct fitting order all the time. Furthermore, even under unforeseen circumstances wherein an error might have occurred in the wheel fitting or packaging step or during assembly of the plurality of wheels for a vehicle in a tire fitting centre or in a tire assembly station, or in case of human or system errors at any stage of the wheel preparation and assembly, obtaining the sensor information of the wheel sensors would provide all the necessary information for accurate wheel assembly, thus preventing or eliminating failures.

According to an embodiment, the method may further comprise generating an assembly label for the wheel based on the associated sensor information to the obtained wheel-assembly information and enabling identification of the wheel by means of the generated assembly label for the wheel.

According to yet another embodiment, the method may further comprise the obtaining an identification of the chassis of the vehicle; wherein the wheel-assembly information further comprises the obtained identification of the chassis of the vehicle. The method may further comprise obtaining the predetermined location of the wheel and the predetermined fitting-order of the wheel in connection to the obtained identification of the chassis.

In some embodiments, the method may further comprise obtaining tire-rim information comprising a unique tire-rim combination for the wheel, formed based on an identity of the rim and an identity of the tire of the wheel. The wheel-assembly information may thus further comprise the tire-rim information.

In several embodiments, the method may further comprise forming a first data set by obtaining a predetermined location and a predetermined fitting-order on the vehicle for each wheel of a plurality of wheels to be mounted onto the vehicle. The wheel-assembly information thus may further comprise the formed first data set. The method may further comprise forming a second data set by obtaining an identity of a wheel sensor located on a corresponding rim and/or in a corresponding tire of each wheel of the plurality of the wheels. The sensor information thus may further comprise the second data set.

According to a second aspect of the present disclosure, there is provided a computer program product comprising instructions which, when the program is executed by one or more processors of a processing circuitry, causes the processing circuitry to carry out the method according to any one of the embodiments of the method of the first aspect disclosed herein.

According to a fourth aspect of the present disclosure, there is provided a system for enabling identification of a wheel to be mounted onto a vehicle, the system comprising processing circuitry configured to obtain sensor information comprising an identity of a wheel sensor located on a corresponding rim and/or in a corresponding tire of the wheel. The processing circuitry is further configured to obtain wheel-assembly information comprising a predetermined location of the wheel and a predetermined fitting-order of the wheel on the vehicle and to associate the sensor information to the obtained wheel-assembly information.

According to a fifth aspect of the present disclosure, there is provided a tire fitting station configured for enabling identification of a wheel to be mounted onto a vehicle, the tire fitting station comprising a system according to the fourth aspect and various embodiments of the fourth aspect of the present disclosure. Further embodiments of the different aspects are defined in the dependent claims.

It is to be noted that all the embodiments, elements, features and advantages associated with the first aspect also analogously apply to the other aspects of the present disclosure.

These and other features and advantages of the present disclosure will in the following be further clarified in the following detailed description.

### BRIEF DESCRIPTION OF THE DRAWINGS

Features and advantages of the embodiments will become readily apparent to those skilled in the art by the following detailed description of exemplary embodiments thereof with reference to the accompanying drawings, wherein:
Fig. 1 shows a side view of a vehicle according to several embodiments of the present disclosure;
Fig. 2a shows a schematic illustration of a top view of the vehicle and wheel locations thereon according to several embodiments of the present disclosure;
Fig. 2b shows a schematic illustration of a top view of a vehicle chassis and wheel locations on the vehicle chassis according to several embodiments of the present disclosure;
Fig. 3 shows a schematic illustrations of a top view of the vehicle having wheels mounted thereon with wheel sensors at each wheel location according to several embodiments of the present disclosure;
Fig. 4a shows a schematic illustration of a top view of a tire fitting station according to several embodiments of the present disclosure;
Fig. 4b shows a block diagram illustration of a tire fitting system according to several embodiments of the present disclosure;
Fig. 5 shows a flowchart of a method according to several embodiments of the present disclosure.

### DETAILED DESCRIPTION

The invention will now be described more fully hereinafter with reference to the accompanying drawings, in which certain aspects of the invention are shown. This invention may, however, be embodied in many different forms and should not be construed as limited to the embodiments and aspects set forth herein; rather, these embodiments are provided by way of example so that this disclosure will be thorough and complete, and will fully convey the scope of the invention to those skilled in the art. Like numbers refer to like elements throughout the description. It is to be understood that the present invention is not limited to the embodiments described herein and illustrated in the drawings; rather, the skilled person will recognize that many changes and modifications may be made within the scope of the appended claims.

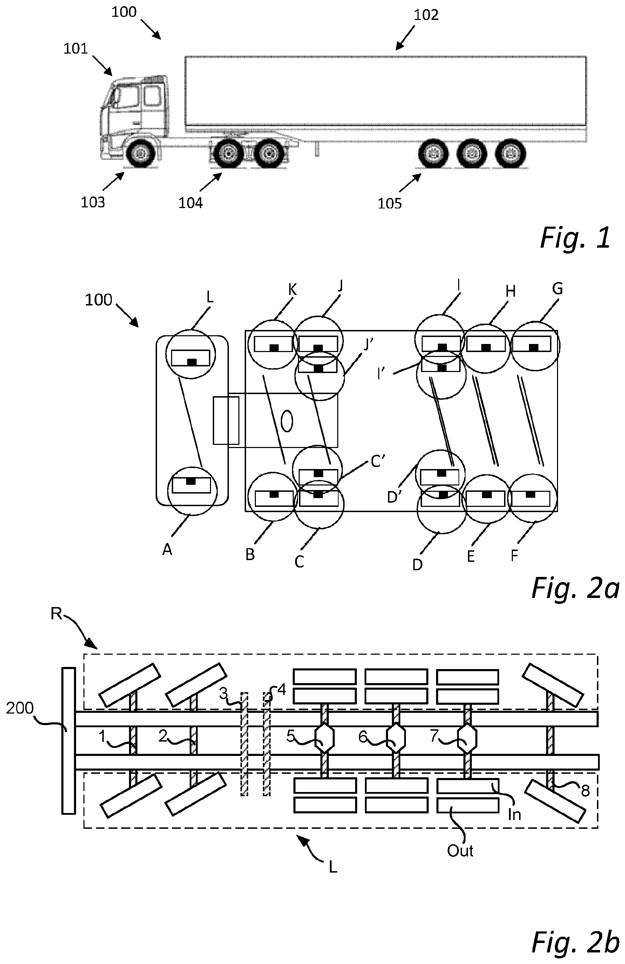

Fig. 1 illustrates an example of a vehicle 100. In this case, the vehicle 100 is exemplified as a heavy-duty vehicle combination for cargo transport. The vehicle 100 in Fig. 1 comprises a truck or towing vehicle 101 configured to tow a trailer unit 102 in a known manner, e.g., by a fifth wheel connection. The vehicle 100 comprises wheels 103, 104, and 105. Herein, a heavy-duty vehicle is taken to be a vehicle designed for the handling and transport of heavier objects or large quantities of cargo. As an example, a heavy-duty vehicle could be a semi-trailer vehicle, or a truck as described above. As another example, a heavy-duty vehicle could be a vehicle designed for use in construction, mining operations, and the like. It is appreciated that the techniques and devices disclosed herein can be applied together with a wide variety of electrically powered vehicle units, not just those exemplified in Fig. 1. Even though the following disclosure mainly discusses vehicles in the form of heavy-duty vehicles, the skilled reader readily realizes that the teachings discussed herein are applicable to other forms of vehicles such as buses or construction equipment. Thus, the techniques disclosed herein are also applicable to, e.g., rigid trucks and also multi-trailer electric heavy-duty vehicles comprising one or more dolly vehicle units. Thus, even though the embodiments herein are described mainly with respect to heavy-duty vehicles, such as semi-trailer vehicles or trucks for cargo transport, the embodiments herein should not be considered restricted to this particular type of vehicle but may also be used in other types of vehicles.

Fig. 2a illustrates a first top-side view of the vehicle 100 and wheel locations A-L thereon. In this example, the wheel location A is the front left wheel location of the truck or towing vehicle 101 of the vehicle 100, while the wheel location L is the front right wheel location of the truck or towing vehicle 101 of the vehicle 100. Furthermore, the wheel locations of the trailer unit 102 ranges around the trailer unit 102 from the wheel location B for the front left wheel of the trailer unit 102 to the wheel location K of the front right wheel of the trailer unit 102. In some cases, certain wheel locations may comprise a set of twin wheels as illustrated for the wheel locations C, D, I, and J. In this case, the outermost wheel location of the set of twin wheels is referred to as C, D, I, and J, respectively, while the innermost wheel location of the set of twin wheels is referred to as C', D', I', and J'. It should also be noted that the notation of the wheel locations is merely made for sake of illustrative purposes to provide a clear and concise references to different wheel locations; in other words, this notation should not be construed as limiting to the embodiments herein. In the embodiments and aspects herein, the wheel location thus comprises a predetermined location of the wheel on the vehicle. In several embodiments and aspects the wheel location on the vehicle may be referred to as the predetermined wheel location on the chassis 200 of the vehicle 100, wherein each wheel is to be mounted to its predetermined wheel location on a corresponding axle on the chassis of the vehicle 100. The predetermined location of the wheel also referred to as wheel location in the rest of this specification may thus comprise a location of the wheel corresponding at least to an AXLE_LOCATION i.e. location of an axle on the chassis 200 of the vehicle onto which the wheel is to be mounted e.g. front axles, drive axles, pusher axles, trailing axle etc. Each axle may receive a predetermined axle identification number enabling straightforward identification of that axle.

For example, an exemplary vehicle chassis 200 having 8 axles is shown in Fig. 2b wherein the front axle receives the axle number 1 and the rest of the axles 2-8 also receive their respective axle numbers, with the axle number 8 indicating the rear axle on the chassis and the other axles being arranged between the front axle 1 and the rear axle 8. Axles 1, 2 and 8 have single wheels mounted thereto. Axles 3 and 4 are idle, whereas axles 5, 6 and 7 have twin wheels mounted thereto.

Further, the wheel location may correspond to an AXLE_SIDE i.e. a side of a specific axle of the chassis 200 onto which the wheel is to be mounted e.g. right or left side of an axle. In the example of Fig. 2b, the front axle 1 has a RIGHT side denoted as "R" and a LEFT side denoted as "L". Thus the right side of the front axle can be indicated and identified as 1R. Even further, the wheel location may further correspond to a POSITION_ON_AXLE i.e. the outermost, denoted as "Out", or the innermost, denoted as "In", wheel location of the set of twin wheels positioned on a specific axle on the chassis of the vehicle. In the example of Fig. 2b, the axle 5 has twin wheel mounted thereto. Thus the wheel location for the left side of the axle 5 may be indicated as 5LO specifying the outermost wheel location of the set of twin wheels and 5LI specifying the innermost wheel location of the set of twin wheels. Therefore, a predetermined location of a specific wheel on the vehicle is readily identified by generating its corresponding wheel location code comprising AXLE _LOCATION, AXLE_SIDE, POSITION_ON_AXLE. Table 1 provides the mapping of the vehicle chassis 200 and its corresponding wheel locations for the example of Fig. 2b.

**Table 1**

| AXLE_LOCATION | AXLE_SIDE | POSITION_ON_AXLE | Wheel location code |
|---|---|---|---|
| Axle 1-first front axle | L / R | I / O | 1LO/ 1LI / 1RI / 1RO |
| Axle 2-second front axle | L / R | I / O | 2LO/ 2LI / 2RI / 2RO |
| Axle 3-first pusher axle - idle | L / R | I / O | 3LO/ 3LI / 3RI / 3RO |
| Axle 4-second pusher axle - idle | L / R | I / O | 4LO/ 4LI / 4RI / 4RO |
| Axle 5-first drive axle | L / R | I / O | 5LO/ 5LI / 5RI / 5RO |
| Axle 6-second drive axle | L / R | I / O | 6LO/ 6LI / 6RI / 6RO |
| Axle 7-third drive axle | L / R | I / O | 7LO/ 7LI / 7RI / 7RO |
| Axle 8-trailing axle | L / R | I / O | 8LO/ 8LI / 8RI / 8RO |

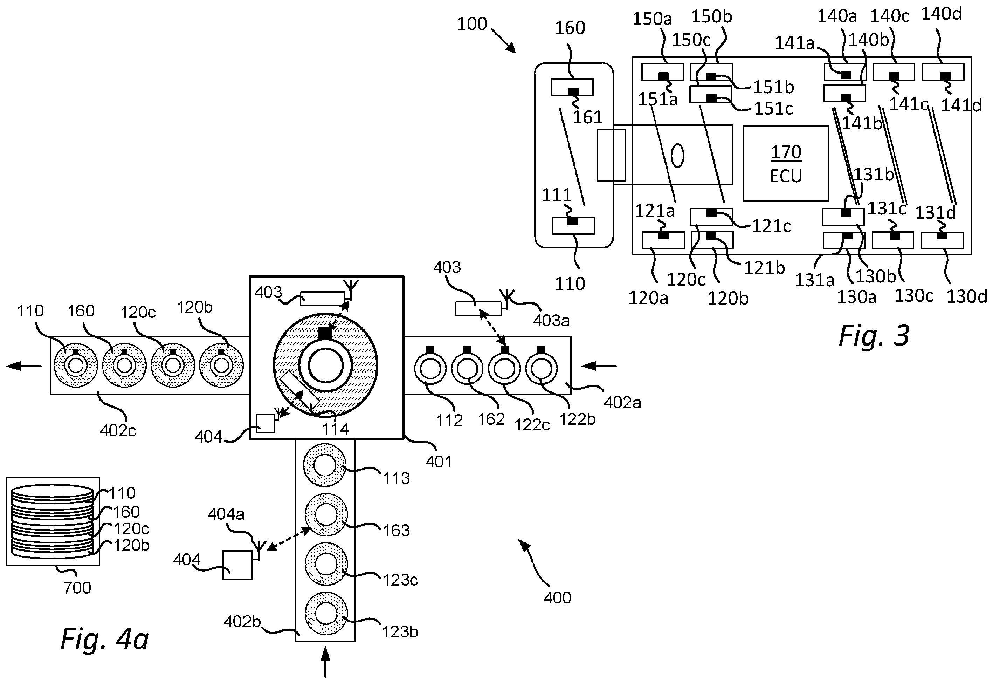

Fig. 3 illustrates a second top-side view of the vehicle 100 having wheels 110, 120, 130, 140, 150, 160 comprising wheel sensors 111, 121, 131, 141, 151, 161 at each wheel location A-L on the vehicle 100 as described above in Fig. 2a. The vehicle 100 further comprise an electronic control unit, ECU 170. The ECU 170 may be arranged at any part of the vehicle 100 e.g. for the vehicle 100 of Fig. 1 it may be arranged in the truck or towing vehicle 101 or in the trailer unit 102. Additionally or alternatively, each of these parts 101, 102 of the vehicle 100 may comprise their own designated ECU. The axle locations, sides, etc. for the vehicle 100 of Fig. 2a and Fig. 3 are also similar to that explained with in Fig. 2b for chassis 200. The configuration of the chassis 200 for the vehicle 100 is clearly a design choice which may vary based on the expected operation of the vehicle 100.

In this example, the wheel 110 at the wheel location A of the truck or towing vehicle 101 of the vehicle 100 comprise at least one wheel sensor 111, while the wheel 120 at the wheel location L of the truck or towing vehicle 101 of the vehicle 100 comprise at least one wheel sensor 121. Similarly, each wheel 120a, 120b, 120c at the two front left wheel locations B, C, C' of the trailer unit 102 of the vehicle 100 comprise each at least one wheel sensor 121a, 121b, 121c, respectively. Also, each wheel 130a, 130b, 130c, 130d at the three rear left wheel locations D, D', E, F of the trailer unit 102 of the vehicle 100 comprise each at least one wheel sensor 131a, 131b, 131c, 131d, respectively.

Furthermore, each wheel 140a, 140b, 140c, 140d at the three rear right wheel locations I, I', H, G of the trailer unit 102 of the vehicle 100 comprise each at least one wheel sensor 141a, 141b, 141c. Lastly, each wheel 150a, 150b, 150c at the two front right wheel locations K, J, J' of the trailer unit 102 of the vehicle 100 comprise each at least one wheel sensor 151a, 151b, 151c. The wheel sensors associated with the above A-L wheel locations may be located on or integrated to a corresponding rim and/or in a corresponding tire of each wheel. In several embodiments and aspects the wheel sensors may comprise any one of a RFID tag located on the rim, or in the tire of the wheel and/or a tire sensor comprising a tire pressure sensor (TPS or TPMS) mounted on the rim or inside the tire of the wheel.

More specifically, the ECU 170 and each of the one or more wheel sensors 111, 121, 131, 141, 151, 161 on the vehicle 100 may be part of an on-board Tire Pressure Monitor System/Tire Health System, TPMS/THS. In other words, the one or more wheel sensors 111, 121, 131, 141, 151, 161 on the vehicle 100 may be TPMS/THS sensors, and the ECU 170 may comprise a TPMS/THS sensor reader. The one or more wheel sensors 111, 121, 131, 141, 151, 161 on the vehicle 100 may also be referred to as TPMS/THS transponders.

Furthermore, each tire and/or rim of each of the wheels 110, 120, 130, 140, 150, 160 may also have one or more RFID, sensor, i.e. RFID tag. The RFID tags may assist with identification of the specific tire and/or specific rim of each of the wheels 110, 120, 130, 140, 150, 160 using radio frequency transmissions. For the sake of illustrative purposes and simplicity of elucidating several examples only, it may be assumed for the rest of this specification that the wheel sensors 111, 121, 131, 141, 151, 161 comprises tire sensors such as TPS sensors 111, 121, 131, 141, 151, 161 mounted onto the rims of the respective wheels 110, 120, 130, 140, 150, 160. In some examples and embodiments however, the tire sensors 111, 121, 131, 141, 151, 161 may be mounted inside or be integrated into the tires of the wheels. This however, should in no way be construed as limiting to the embodiments and aspects set forth herein and the wheel sensors may be of a different type or be arranged on a different part of the wheel such as inside the tire of each wheel.

It is an established practice that prior to wheel assembly i.e. mounting the wheels on a vehicle, typically a tire fitting system comprised in a tire fitting station performs the task of fitting tires to their respective rims for each wheel. Usually each vehicle has specific requirements on tire-rim combinations for each specific wheel which should be followed in the tire fitting station. After the correct tire is fitted to the correct corresponding rim for each wheel, the fitted wheels are packaged in the fitting station and transported to a wheel assembly station. In the wheel assembly station, each fitted wheel is mounted onto a specific wheel-location on the vehicle following an assembly protocol adjoined the wheel package. This task may be performed by a human operator and/or at least partially by an automated wheel assembly system such as a robotic system.

It is of outmost importance that each fitted wheel is mounted onto its specific predetermined wheel-location on the vehicle. Errors in the wheel assembly process may adversely affect the performance and safety of the vehicles on the road. Furthermore, wheel assembly errors usually result in time-consuming and costly trouble shooting attempts.

The present inventor has realized that to alleviate all or some of the above-mentioned problems, accurate inspection systems and methods should be developed to minimize or completely eliminate wheel assembly errors, thus ensuring correct assembly of each wheel to its predetermined wheel location on the vehicle. To this end, the presented tire fitting system and methods performed by the tire fitting system enable identification of each wheel to be mounted onto it predetermined wheel-location on a vehicle in the wheel-assembly station.

Fig. 4a illustrates a tire fitting station 400, also referred to as tire fitting center 400 according to various embodiments and aspects of the present disclosure. The tire fitting center 400, typically comprises a tire inflation station 401 configured to automatically fit tires to their respective rims. In some examples the respective tire and the rim for each wheel may be directed into the inflation chamber 401 and be fitted individually one at a time. Fitting centres 400 are usually operated by automated robotic systems configured to perform the tire-rim fitting operations. However, in some examples and embodiments the tire fitting station 400 or the tire inflation station 401 may comprise conventional manually-operated entities. In some examples, the tire fitting station 400 may comprise multi-cage slots for inflating a plurality of wheels in parallel.

The fitting station 400 typically comprises one or more conveyor belts 402a, 402b, 402c arranged for loading and carrying the rims and tires into the inflation station 401 where the fitting operation is to be performed. The tire-rim combinations for each wheel are predetermined and may be unique for each wheel. For instance in the example of Fig. 4a corresponding to some of the wheels of the vehicle 100 of Figs. 2a and 3, rims 112, 162, 122c and 122b are shown which are loaded on the conveyor belt 402a and are to fitted to the exemplary tires 113, 163, 123c and 123b respectively which are loaded on the conveyor belt 402b. After the fitting operation is completed in the inflation chamber 401, the fitted wheels 110, 160, 120c and 120b are outputted onto conveyor belt 402c where they are transported to the packaging station (not shown), at which the fitted wheels will be packaged in the same order as arranged on the conveyor belt 402c. It is stablished practice that each rim may be fitted with a label which is read by a label reader such as a camera or an RFID scanner while passing over the conveyor belt 402a.

Similarly, each tire may be fitted with a label such as an RFID tag which is also read by a label reader e.g. an RFID scanner while passing through the conveyor belt 402b. Furthermore, in some examples, the camera or any other scanner may be implemented with machine learning or neural network algorithms for performing object detection and classification. Such systems may be employed for identifying and determining the rim or the tire. Moreover, tire-information from the tire rubber such as the type of the tire, specific installation and operation of the tire as well as the respective rim of that tire may be extracted by the cameras. In some examples text or symbols may be embossed in the rubber of the tire and the camera may read the text or symbols for deciding a specific installation requirement of a tire e.g. if the tire is designed for rolling in only one direction etc.

The sensor information indicative of the specific rims and tires based on their read labels or tags is used later to ensure that the correct rims and tries are loaded onto the conveyor belts. Furthermore, it is ensured that the correct rims and tires are also placed in the correct order to enter the inflation chamber 401 to be fitted forming the correct tire-rim combination for each wheel. In the example of Fig. 4a, the inflation chamber 401 will fit tire-rim combinations 113-112, 163-162, 123c-122c and 123b-122b in this specifically presented fitting order. The rims and tires are loaded on the conveyor belts following the fitting order of the wheels on the vehicle as explained in the following.

Accordingly, each wheel is prepared in the fitting centre in a predetermined fitting-order to be mounted on a specific vehicle. Stated differently, a predetermined fitting-order of the wheel is indicative of a specific order of assembly of that wheel onto the vehicle. More specifically, the predetermined fitting-order of the wheel corresponds to the specific order of assembly of that wheel on the chassis of the vehicle and even more specifically, to a predetermined location of its corresponding axle on the chassis i.e. AXLE _LOCATION for that wheel. The fitting order of each wheel may also further correspond to the AXLE_SIDE, and/or POSITION_ON_AXLE on the chassis of the vehicle. Therefore, each wheel is prepared to be assembled onto its wheel-location on the vehicle with the predetermined fitting-order. For instance, referring to the fitted wheels 110, 160, 120c and 120b in Fig. 4a, the predetermined fitting order of an exemplary wheel package 700 for vehicle 100 comprising only the exemplary fitted wheels 110, 160, 120c and 120b is arranged to be wheel 110 "first" to be mounted onto wheel location "A" corresponding to wheel-location code "1LO", wheel 160 "second" to be mounted onto wheel location "L" corresponding to wheel-location code "1RO", wheel 120c "third" to be mounted onto wheel location C' corresponding to wheel-location code "3LI", and wheel 120b "fourth" to be mounted onto wheel location C corresponding to wheel-location code "3LO". The wheels are arranged from top to bottom in the pile of the package 700 in the above order of fitting. The fitting order and wheel location of the above mentioned exemplary wheel package for vehicle 100 is also shown in table 2 below. It should be clear to the skilled person that the aforementioned is merely an unrestricted and non-limiting example to elucidate the notion of fitting order and wheel location for each wheel which will be mounted onto a vehicle and any other number of wheels or any other order of fitting the wheels may be devised accordingly based on the vehicle specifications, number of axles, wheel locations, etc.

**Table 2**

| Wheel number | Rim number | Tire number | Wheel location | Wheel location code | Fitting order | Wheel assembly code |
|---|---|---|---|---|---|---|
| 110 | 112 | 113 | A | 1LO | 1 | 1LO-1 |
| 160 | 162 | 163 | L | 1RO | 2 | 1RO-2 |
| 120c | 122c | 123c | C' | 3LI | 3 | 3LI-3 |
| 120b | 122b | 123b | C | 3LO | 4 | 3LO-4 |

In several embodiments and aspects the wheel-location code of each wheel may be associated to the fitting-order of that wheel on the vehicle to create a wheel-assembly code for each wheel. For instance as shown in table 2, an associated wheel-assembly code "1LO-1" is generated for wheel 110. The other wheels similarly receive their corresponding wheel assembly code. The wheel-assembly code for each wheel may be comprised in the wheel-assembly information for each wheel.

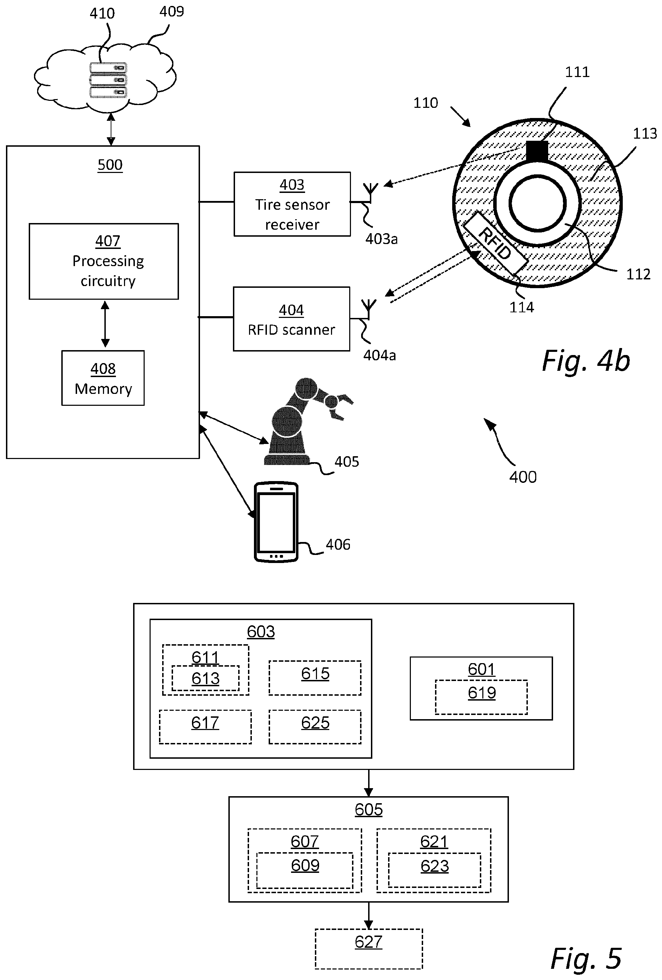

Fig. 4b illustrates a tire fitting system 500 being comprised in the tire fitting station 400 of Fig. 4a. The tire fitting system 500 is configured for enabling identification of a wheel to be mounted onto a vehicle 100 e.g. in a wheel-assembly station (not shown). It should be noted that, although not shown in Fig. 4b, known conventional features of the tire fitting system 500, such as, for example, a power source, e.g. a battery or main connection, may be assumed to be comprised in the tire fitting system 500. According to several embodiments and aspects, the tire fitting system 500 may comprise, be arranged to be connected to, or be configured to communicate with at least one sensor reader device or sensor receiver device such an antenna unit. The tire fitting system 500 is thus configured to obtain sensor information comprising an identity i.e. a unique identifier of a wheel sensor located on a corresponding rim and/or in a corresponding tire of the wheel.

The tire fitting system 500 may accordingly comprise, be arranged to be connected to, or be configured to communicate with a wheel sensor receiver 403. The wheel sensor receiver 403 may be a TPMS/THS system receiver in case the wheel sensor is a tire sensor e.g. a TPS sensor. The TPS sensors may be arranged inside the tire or on the rim of the wheel. A top view illustration of an exemplary wheel 110, with the tire 113 and the rim 112 is depicted in Fig. 4b. The tire sensor 111 being a TPS sensor in this case is mounted onto the rim 112.

The wheel sensor receiver 403 may be configured to receive or read wheel sensor signals transmitted from wheel sensors 111, 121, 131, 141, 151, 161 integrated to or arranged onto a rim and/or a tire of a wheel, e.g. from TPS sensors 111, 121, 131, 141, 151, 161 which are mounted on the rims of the wheels 110, 120, 130, 140, 150, 160 as described with reference to Fig. 3 earlier. The wheel sensor receiver 403 may comprise an antenna 403a for receiving a sensor signal from the TPS sensors 111, 121, 131, 141, 151, 161. The TPS sensors may be mounted onto any location on each rim of each wheel according to intended applications and vehicle specifications. Here, it should also be noted that the sensor signal from the TPS sensors 111, 121, 131, 141, 151, 161 may be sent when the respective tires of each wheel 110, 120, 130, 140, 150, 160 is fitted to and inflated on the respective rims in the inflation chamber 401 and thus activated by a change in tire pressure i.e. delta pressure, or when the TPS sensor 111, 121, 131, 141, 151, 161 for each wheel is activated by low-frequency actuator (not shown). For instance, the TPS sensors 111, 121, 131, 141, 151, 161 may be activated by low-frequency actuator on the conveyor belt 402a, where the rims equipped with TPS sensors are scanned and activated by the sensor receiver 403. Accordingly, in some embodiments the sensor receiver may either be arranged inside the inflation chamber 401 and/or in the vicinity or as a part of the conveyor belts such as the conveyor belt 402a in the tire fitting station 400.

Each wheel sensor typically has its unique identity. In case the wheel sensors are TPS sensors, each TPS sensor has its unique identification number, TPS_ID. When the TPS sensor is activated and read by the sensor receiver 403, it transmits its sensor information comprising the TPS_ID to the sensor receiver 403. The sensor information may further comprise tire pressures, tire temperatures, tire deformations, etc.

Additionally or alternatively, the tire fitting system 500 may also comprise, be arranged to be connected to, or be configured to communicate with an RFID scanner 404, i.e. an RFID scanning apparatus. The RFID scanner 404 may be configured to scan for RFID sensors, such as, the RFID tag 114 integrated into or mounted onto the tire of the wheel 110 in Fig. 4b. The RFID scanner 404 may comprise an antenna 404a for transmitting an RFID signal, e.g. an RFID interrogation signal, towards the RFID tags. As the RFID tag receives the RFID signal from the RFID scanner 404, the RFID tag will respond with a signal comprising the identity of the RFID tag. The RFID scanner 404 may thus receive a response signal from the RFID tag receiving its transmitted RFID signal. The unique RFID information for each RFID tag may also be comprised in the sensor information of each wheel.

In some examples and embodiments an identity of the tire sensors 111, 121, 131, 141, 151, 161 e.g. the TPS_ID may be obtained and each be associated to an identity of an RFID tag located either on the rim or the tire of the wheel such as RFID tag 114 or a different RFID tag (not shown) for wheel 110. This way by scanning the RFID tag the sensor information of the tire sensors such as TPS_ID could be obtained in a straightforward manner. An advantage is provided that the TPS sensors need not be activated for receiving their sensor information, but rather scanning the associated RFID tag would provide the sensor information of the tire sensors. The association of the tire sensor identity and the RFID identity may be performed inside the inflation chamber 401 where the sensor receiver 403 and the RFID scanner 404 are arranged. Thus, the processing circuitry 407 may be configured to obtain the sensor signals read by the sensor receiver 403 and the RFID scanner 404 for each wheel and establish the association.

According to some embodiments, the tire fitting system 500 may also comprise, be arranged to be connected to, or be configured to communicate with an automation system 405 and/or a display 406. The automation system 405 may be the robotic systems arranged to perform automatic tire-rim fitting operations in the tire fitting centre 400. The display may be a display 406 for presenting information to an operator of the tire fitting system 400 and/or operator of a wheel assembly station (not shown), either locally or remotely. According to several embodiments and examples, each wheel may be designed to have a specific tire pressure depending on its operation and specific wheel location on the vehicle 100 and the inflation station 401 may be informed e.g. by the tire fitting system 500 of such pressure information for each specific tire-rim combination to be fitted.

Accordingly, the inflation station 401 is configured to provide the predetermined tire pressure to its corresponding tire for each wheel. The delivered pressure for each wheel may be measured and recorded by the activated TPS sensor within the inflation station 401 and be provided to the tire fitting system 500 or the inflation station 401 as feedback to ensure that the delivered pressure to each tire matches the predetermined pressure for that tire. Furthermore, the predetermined tire pressure and/or the recorded delivered pressure to each tire by the inflation station 401 may further be comprised in the sensor information and be associated to the wheel-location or wheel-assembly code for each wheel. The processing circuitry 407 may further be configured to associate the TPS_ID or its associated RFID, to the predetermined pressure and/or the recorded delivered pressure for each tire. According to some examples, the pressure information may later be used in the wheel assembly station to ensure that the assembled wheels maintain the correct pressure level. If for instance after wheel assembly, the ECU 170 of the vehicle 100 registers a first pressure for an exemplary assembled wheel which after comparison with the predetermined tire pressure and/or the recorded delivered pressure for that tire reveals a discrepancy, an error signal may be generated and a tire pressure assessment for that tire may be suggested. The tire fitting system 500 comprises processing circuitry 407 and a memory 408. It should also be noted that some or all of the functionality described in the embodiments herein as being performed by the tire fitting system 500 may be provided by the processing circuitry 407 executing instructions stored on a computer-readable medium, such as, the memory 408 shown in Fig. 4b. For example, the processing circuitry 407 may be configured to communicate with the sensor receiver 403 and/or RFID scanner 404 to obtain sensor information of the wheel sensors. The processing circuitry 407 may further be arranged to communicate with the automation system 405 and/or the display 406. In some embodiments, the tire fitting system 500 or processing circuitry 407 of the tire fitting system 500 may be configured to, or may comprise additional modules (not shown) configured to, provide instructions to the automation system 405 arranged to physically align and/or fit the tires on the respective rims for each wheel inside the inflation chamber 401. In some embodiments, the tire fitting system 500 or processing circuitry 407 may be further configured to, or may comprise additional modules (not shown) configured to, display the instructions for aligning and/or fitting the tires onto their respective rims on the display 406.

Furthermore, the processing circuitry 407 may be configured to be in communication with the memory 408 and/or external networks 409 such as a cloud network 409 for transmitting information and/or instructions. For instance, the processing circuitry 407 may transmit the obtained sensor information, from the sensor receiver 403, of the wheel sensors such as sensor information of the TPS sensors 111, 121, 131, 141, 151, 161 to the memory 408 and/or to the external networks 409 to be logged and stored e.g. in a remote server 410.

Furthermore, the tire fitting system 500 is configured to obtain wheel-assembly information for each wheel comprising a predetermined location of the wheel and a predetermined fitting-order of the wheel on the vehicle. More specifically, the processing circuitry 407 of the tire fitting system 500 is configured to obtain the wheel-assembly information. The processing circuitry 407 may obtain such information from the memory 408 and/or from the external networks 409 e.g. from the remote servers 410 through the external networks 409. As mentioned earlier in the examples outlined in tables 1 and 2, the wheel-assembly information for each wheel may comprise the wheel-assembly code comprising the wheel location code and fitting-order for each wheel on the vehicle and more specifically on the chassis 200 of the vehicle 100.

In several aspects and embodiments, the processing circuitry 407 is further configured to associate the obtained sensor information for each wheel sensor to the obtained wheel-assembly information. In other words, the obtained sensor information data is coupled to the obtained wheel-assembly information which e.g. comprises the wheel-location and/or wheel-assembly code for each wheel. This way, an advantage is provided by the presented tire fitting system 500 wherein the predetermined wheel location, the wheel fitting-order and the sensor information of each wheel e.g. TPS_ID, in case of the sensors being TPS sensors, for each wheel are all data-associated to create associated wheel data. Thus advantageously, by acquiring only the sensor information such as the TPS_ID of each wheel, all the other information of the wheel i.e. wheel-assembly code coupled to the TPS_ID are readily extracted. Consequently, the tire fitting system 500 enables accurate identification of each wheel to be mounted onto a vehicle e.g. in a wheel assembly station. This way, by only scanning the sensor ID the exact location of each specific wheel on the vehicle as well as its corresponding fitting-order onto the vehicle is provided to a wheel assembly operator of the wheel assembly station.

The present inventor has thus realized that by obtaining the sensor identity for the wheel sensor of each wheel associated to the wheel assembly information, the exact wheel location and the fitting order of each specific wheel on the vehicle can be accurately determined. Thus, by the inventive method and system it is ensured with high accuracy that the right wheel is assembled to the right wheel location and in the correct fitting order all the time. Furthermore, even under unforeseen circumstances wherein an error might have occurred in the wheel fitting or in the packaging step of the plurality of wheels for a vehicle in the fitting centre or in case of human or system errors at any stage of the wheel preparation and assembly, obtaining the ID of the wheel sensors would provide all the necessary information for accurate wheel assembly, thus preventing or eliminating failures.

Furthermore, the conventional strict and rather inflexible requirements on packaging or transportation of wheel packages arrange in a pile in a specific order to be mounted on a specific vehicle may no longer be required, since even if a wheel is misplaced in the pile of the wheel package it can be easily identified by obtaining its wheel sensor ID and assembled onto the correct wheel location.

Moreover, instances of a faulty wheel assembly by the human operator or by the automatic wheel assembly system can be identified immediately due to a discrepancy between the incorrect wheel-location or fitting order and the associated wheel assembly information to the wheel sensor ID. Under such circumstances, the processing circuitry 407 may further be configured for generating a fault or error signal presented to the human or automated operator, optionally via a display or a loudspeaker or the like.

Conventionally such errors will lead to a full re-inspection of the vehicle, following the discharge of the vehicle from the assembly station, which in turn leads to increased workload, disruption in the vehicle production flow and increased production costs.

What is more is that the methods and systems of the present disclosure pave the way for fully automatizing the wheel assembly station without the need for human operators to identify and assemble the wheels onto the vehicles. Robotic solutions may accordingly be configured to identify and mount each wheel to its predetermined wheel location and with its predetermined fitting order onto a specific vehicle.

Accordingly, the processing circuitry 407 may further be configured to generate a wheel assembly label for each wheel based on the associated sensor information to the obtained wheel-assembly information and enable identification of each wheel by means of the generated assembly label for the wheel. The wheel assembly label thus comprises the associated wheel data.

The wheel assembly label in the present context may be construed as comprising a physical label such as a sticker label to be mounted on each fitted wheel and comprising the associated wheel data. The physical label may be used by a wheel assembly human operator for identification of each wheel in a wheel assembly station.

Additionally or alternatively, the wheel assembly label for each wheel may comprise a machine-readable code such as a barcode or a QR code embedded with the associated wheel data, the machine-readable codes also being mounted onto each wheel. The machine-readable code may be used e.g. scanned by a wheel assembly human or automated operator for identification of each wheel in a wheel assembly station.

Additionally or alternatively, the wheel assembly label may comprise an electronic wheel assembly label in the form of a log-file or the like which may be transmitted to and stored in the memory 408 and/or in the external networks 409 or remote servers 410. Further, the electronic wheel assembly labels may be transmitted to the wheel assembly stations where they can be used by the automated wheel assembly operators and/or presented to human operators via a display such as the display 406 for accurate identification of each wheel prior to or during the wheel assembly process onto the vehicle. In some examples and embodiments, the electronic wheel assembly labels may further be transmitted to and stored in the ECU 170 of the vehicle 100 for future use in maintenance or service operations. In some embodiments, the generated wheel assembly label may comprise the associated wheel data for only one wheel, whereas in some embodiments it may comprise the associated wheel data for one or more wheels prepared to be fitted onto a vehicle. In some embodiments the generated wheel assembly labels may be structured in a wheel assembly matrix.

As shown in table 3 below for the same example of the fitted wheels of Fig. 4a, the TPS_IDs of the wheels may be associated by the processing circuitry 407 to either the wheel-location or wheel-assembly codes for each wheel comprised in the wheel-assembly information obtained by the processing circuitry 407.

In some embodiments and aspects, the wheel-assembly information may further comprise an identity of the vehicle 100 onto which a specific wheel or a plurality of specific wheels are prepared to be mounted. The vehicle identity may be a unique vehicle identity provided to the processing circuitry 407 by the memory 408 and/or the external networks 409. In several embodiments the identity of the vehicle comprises an identification of the chassis of the vehicle, chassis_ID, which is a unique ID for each vehicle. By way of example the vehicle 100 may be assigned the chassis_ID of CH_ID_200. The processing circuitry 407 may thus be configured for obtaining the chassis_ID of the vehicle 100 from the memory 408 and/or from the external networks 409. The wheel-assembly information may further comprise the obtained identification of the chassis 200 of the vehicle 100. In several aspects and embodiments, the predetermined location of each wheel and the predetermined fitting-order of each wheel on the vehicle may be connected to the unique identity of the vehicle e.g. to the chassis_ID of the vehicle. Accordingly, obtaining the predetermined location of the wheel and the predetermined fitting-order of the wheel may be executed by the processing circuitry 407 in connection to the obtained identification of the chassis. Stated differently, the predetermined location of the wheel and the predetermined fitting-order of the wheel may for each and every one of the plurality of wheels for a specific vehicle 100 having its unique chassis_ID, be information associated to and embedded in the chassis_ID of that vehicle 100. Alternatively, such information and the chassis_ID for a specific vehicle may be obtained by the processing circuitry 407 concurrently but from different databases or via different data links and be associated with each other by the processing circuitry 407. The processing circuitry 407 may further be configured to associate the sensor information such as TPS_ID or its associated RFID, the wheel-assembly code or the wheel-location comprised in the wheel-assembly information also to the chassis_ID of the vehicle 100 as also shown in table 3 for the exemplary fitted wheels of Fig. 4a.

**Table 3**

| Wheel number | Rim number | Tire number | Wheel location | Wheel location code | Fitting order | Wheel assembly code | TPS_ID | wheel assembly label |
|---|---|---|---|---|---|---|---|---|
| 110 | 112 | 113 | A | 1LO | 1 | 1LO-1 | TPS_110 | 1LO / 1LO-1 → TPS_110 |
| 160 | 162 | 163 | L | 1RO | 2 | 1RO-2 | TPS_160 | 1RO / 1RO-2 → TPS_160 |
| 120c | 122c | 123c | C' | 3LI | 3 | 3LI-3 | TPS_120c | 3LI / 3LI-3 → TPS_120c |
| 120b | 122b | 123b | C | 3LO | 4 | 3LO-4 | TPS_120b | 3LO / 3LO-4 → TPS_120b |
| CH_ID_200 | | | | | | | | |

In some embodiments, the processing circuitry 407 of the tire fitting system 500 may further be configured to form a first data set by obtaining a predetermined location and a predetermined fitting-order on the vehicle for each wheel of a plurality of wheels to be mounted onto the vehicle. The wheel-assembly information may thus further comprise the formed first data set. Further, the processing circuitry 407 may be configured to form a second data set by obtaining an identity of a wheel sensor located on a corresponding rim and/or in a corresponding tire of each wheel of the plurality of the wheels. The sensor information may thus further comprise the second data set. This way, the processing circuitry 407 generates a first sequence i.e. the first data set and the second sequence i.e. the second data set and establishes an association between the first sequence and the second sequence. Thus, the sensor information such as TPS_ID or its associated RFID for each wheel among a plurality of wheels to be mounted onto the vehicle 100 is associated with the wheel-assembly code or the wheel-location comprised in the wheel-assembly information for its corresponding wheel among the plurality of wheels and is compiled in an associated wheel sequence data. The processing circuitry 407 may further be configured to generate a wheel assembly matrix for the plurality of the wheels, the assembly matrix comprising a plurality of assembly labels. Each label for each specific wheel may be generated based on the associated sensor information of the wheel to the obtained wheel assembly information of that wheel. In some embodiments, the generated wheel assembly label may comprise the associated wheel data for one or more wheels prepared to be fitted onto the vehicle, thus only one assembly label may be generated comprising the associated wheel sequence data for all the wheels to be mounted on a specific vehicle 100. In some embodiments the wheel assembly matrix may be constructed for a plurality of vehicles to be mounted with their respective wheels. Accordingly, the assembly matrix comprises a plurality of generated assembly labels each associated with a specific vehicle and comprising the associated wheel sequence data of that vehicle.

In some aspects and embodiments, the processing circuitry 407 may further be configured to obtain tire-rim information comprising the unique tire-rim combination for each wheel, formed based on an identity of the rim and an identity of the tire of the wheel. The identity of the rim may be obtained by scanning a rim label by a label reader such as a camera or an RFID scanner. The identity of the tire may be obtained by scanning a tire label by a label reader e.g. an RFID scanner. The associated tire-rim combination is comprised in the wheel-assembly information for each wheel among the plurality of wheels. Consequently, the processing circuitry 407 may further be configured to associate the sensor information such as TPS_ID or its associated RFID, the wheel-assembly code or the wheel-location comprised in the wheel-assembly information also to the unique tire-rim combination of each wheel. In some embodiments and aspects, the processing circuitry 407 may be further configured to form a third data set by obtaining the unique tire-rim combination for each wheel among the plurality of wheels formed based on the identity of the rim and the identity of the tire of each wheel. Consequently, the tire-rim information may comprise the third data set and the third data set similarly be associated with the first and second data sets, comprising sensor information such as TPS_ID or its associated RFID, and the wheel-assembly code or the wheel-location comprised in the wheel-assembly information for each wheel respectively.

In various embodiments and aspects, the processing circuitry 407 or the tire fitting system 500 e.g. via a communication module (not shown) may be configured to provide e.g. transmit the generated assembly labels or the generated assembly matrices to an operator (not shown) and/or to an automated wheel-assembly system (not shown) in a wheel-assembly station (not shown) for enabling identification of a wheel 110, 120, 130, 140, 150, 160 or a plurality of wheels 110, 120, 130, 140, 150, 160 to be mounted onto the vehicle 100 in the wheel-assembly station. Further, the processing circuitry 407 or the tire fitting system 500 may be configured to transmit instructions to the wheel assembly station for performing wheel assembly on the vehicle 100 and/or for performing wheel-assembly assurance for the vehicle 100. The instructions may comprise the generated wheel assembly labels or the generated assembly matrices for each wheel, for the plurality of wheels or for the plurality of vehicles to be mounted with their respective wheel package.

The embodiments and aspects described above may be at least partly implemented through one or more processors, such as, the processing circuitry 407 in the tire fitting system 500, together with computer program code for performing the functions and actions of the embodiments herein. The program code mentioned above may also be provided as a computer program product, for instance in the form of a data carrier carrying computer program code or code means for performing the embodiments herein when being loaded into the processing circuitry 407 in the tire fitting system 500. The data carrier, or computer readable medium, may be one of an electronic signal, optical signal, radio signal or computer-readable storage medium. The computer program code may e.g. be provided as pure program code in the tire fitting system 500 or on a server such as the remote server 410 and downloaded to the tire fitting system 500. Thus, it should be noted that the tire fitting system 500 may in some embodiments be implemented as computer programs stored at least partially in the memory 408 and/or the external networks 409 and remote servers 410 as illustrated in Fig. 4b, e.g. the computer readable storage unit/module, for execution by processors or processing modules, e.g. the processing circuitry 407 in the tire fitting system 500 in Fig. 4b.

Those skilled in the art will also appreciate that the processing circuitry 407 and the memory 408 described above may refer to a combination of analog and digital circuits, and/or one or more processors configured with software and/or firmware, e.g. stored in a computer readable storage unit/module, that when executed by the one or more processors such as the processing circuitry 407 perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

Fig. 5 is an illustrated example of a flowchart of a method 600 comprising actions, steps or operations which may be performed at by a tire fitting system 500 of a tire fitting station 400 described in the foregoing.

The method 600 is performed by a tire-fitting system 500 for enabling identification of a wheel 110, 120, 130, 140, 150, 160 to be mounted onto a vehicle 100. The method 600 comprises obtaining 601 sensor information comprising an identity of a wheel sensor 111, 121, 131, 141, 151, 161 located on a corresponding rim and/or in a corresponding tire of the wheel. Further, the method 600 comprises obtaining 603 wheel-assembly information comprising a predetermined location of the wheel and a predetermined fitting-order of the wheel 110, 120, 130, 140, 150, 160 on the vehicle 100. The method 600 further comprises associating 605 the obtained sensor information to the obtained wheel-assembly information.

It is to be noted that all the embodiments, elements, features, examples and advantages described earlier with reference to the tire fitting system 500, or the processing circuitry 407 of the tire fitting system 500 and Figs. 1 - 4 also analogously and equally apply to various embodiments of the methods 600 described herein with reference to Fig. 5. For example the wheel sensors 111, 121, 131, 141, 151, 161 may, as described with reference to Fig. 3, comprise tire sensors such as TPS sensors 111, 121, 131, 141, 151, 161 mounted onto the rims of the respective wheels 110, 120, 130, 140, 150, 160. In some examples and embodiments however, the tire sensors 111, 121, 131, 141, 151, 161 may be mounted inside or be integrated into the tires of the wheels. This however, should in no way be construed as limiting to the embodiments and aspects set forth herein and the sensors may be of a different type or be arranged on a different part of the wheel such as in the tire of each wheel. The same applies to steps and actions comprising generating wheel-location and/or wheel-assembly code comprised in the wheel-assembly information and establishing the association between the sensor information such as TPS_ID or its associated RFID, etc. which has been explained in sufficient detail earlier.

According to an embodiment, the method 600 may further comprise generating 607 an assembly label for the wheel 110, 120, 130, 140, 150, 160 based on the associated sensor information to the obtained wheel-assembly information and enabling 609 identification of the wheel 110, 120, 130, 140, 150, 160 by means of the generated assembly label for the wheel.

According to yet another embodiment, the method 600 may further comprise obtaining 611 an identification of the chassis of the vehicle; wherein the wheel-assembly information further comprises the obtained identification of the chassis of the vehicle. The method may further comprise obtaining 613 the predetermined location of the wheel and the predetermined fitting-order of the wheel in connection to the obtained identification of the chassis.

In some embodiments, the method 600 may further comprise obtaining 615 tire-rim information comprising a unique tire-rim combination for the wheel, formed based on an identity of the rim and an identity of the tire of the wheel. The wheel-assembly information may thus further comprise the tire-rim information.

In several embodiments, the method 600 may further comprise forming 617 a first data set by obtaining a predetermined location and a predetermined fitting-order on the vehicle 100 for each wheel of a plurality of wheels 110, 120, 130, 140, 150, 160 to be mounted onto the vehicle. The wheel-assembly information thus may further comprise the formed first data set. The method 600 may further comprise forming 619 a second data set by obtaining an identity of a wheel sensor located on a corresponding rim and/or in a corresponding tire of each wheel of the plurality of the wheels 110, 120, 130, 140, 150, 160. The sensor information thus may further comprise the second data set.

In various embodiments, the method 600 may further comprise generating 621 a wheel assembly matrix for the plurality of the wheels 110, 120, 130, 140, 150, 160, the assembly matrix comprising a plurality of assembly labels generated based on the associated sensor information to the obtained wheel assembly information. The method 600 may further comprise enabling 623 identification of the wheels 110, 120, 130, 140, 150, 160 by means of the generated assembly matrix.

In some embodiments, the method 600 may further comprise forming 625 a third data set by obtaining the unique tire-rim combination for each wheel among the plurality of wheels 110, 120, 130, 140, 150, 160 formed based on the identity of the rim and the identity of the tire of each wheel. Thus, the tire-rim information may further comprise the third data set. The wheel-assembly information may further comprise the tire-rim information.

In several embodiments, the method 600 may further comprise providing 627 e.g. transmitting the established association between the obtained sensor information and the obtained wheel-assembly information to an operator (not shown) and/or to an automated wheel-assembly system (not shown) in a wheel-assembly station (not shown). The step of providing 627 may comprise providing 627 the generated assembly label or the generated assembly matrix to an operator and/or to an automated wheel-assembly system in a wheel-assembly station for enabling identification of the wheel 110, 120, 130, 140, 150, 160 to be mounted onto the vehicle 100 in the wheel-assembly station. The tire fitting system 500 may be configured for providing 627 e.g. transmitting the information to the wheel assembly station via the external networks 409 or the remote server 410.

It should also be noted that the various example embodiments described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

## Claims

1. A method performed by a tire-fitting system for enabling identification of a wheel to be mounted onto a vehicle, the method comprising:
obtaining sensor information comprising an identity of a wheel sensor (111) located on a corresponding rim (112) and/or in a corresponding tire (113) of the wheel (110);
obtaining wheel-assembly information (603) comprising a predetermined location of the wheel and a predetermined fitting-order of the wheel on the vehicle;
associating (605) the sensor information to the obtained wheel-assembly information.

2. The method according to claim 1, wherein the method further comprises:
generating an assembly label (607) for the wheel based on the associated sensor information to the obtained wheel-assembly information; and
enabling identification of the wheel by means of the generated assembly label for the wheel.

3. The method according to any of claims 1 or 2, wherein the wheel sensor comprises any one of a Radio Frequency Identification, RFID, tag located on the rim, or in the tire of the wheel and/or a tire sensor comprising a tire pressure sensor (111) mounted on the rim or inside the tire of the wheel.

4. The method according to any of the claims 1 - 3, wherein the method further comprises:
obtaining an identification of the chassis of the vehicle; wherein the wheel-assembly information further comprises the obtained identification of the chassis of the vehicle (611); and
obtaining the predetermined location of the wheel (613) and the predetermined fitting-order of the wheel in connection to the obtained identification of the chassis.

5. The method according to any one of the preceding claims wherein the predetermined location of the wheel on the chassis corresponds at least to a predetermined location of a corresponding axle on the chassis of the vehicle onto which the wheel is to be mounted and the predetermined fitting-order of the wheel on the chassis is indicative of an order of assembly of the wheel onto the predetermined location of its corresponding axle on the chassis of the vehicle.

6. The method according to any one of the preceding claims, wherein the method further comprises:
obtaining tire-rim information (615) comprising a unique tire-rim combination for the wheel, formed based on an identity of the rim and an identity of the tire of the wheel; wherein the wheel-assembly information further comprises the tire-rim information.

7. The method according to any one of the preceding claims, wherein the method further comprises:
forming a first data set (617) by obtaining a predetermined location and a predetermined fitting-order on the vehicle for each wheel of a plurality of wheels to be mounted onto the vehicle; wherein the wheel-assembly information comprises the formed first data set; and
forming a second data set (619) by obtaining an identity of a wheel sensor located on a corresponding rim and/or in a corresponding tire of each wheel of the plurality of the wheels; wherein the sensor information comprises the second data set.

8. A system for enabling identification of a wheel to be mounted onto a vehicle, the system comprising processing circuitry (403, 404, 407) configured to:
obtain sensor information comprising an identity of a wheel sensor located on a corresponding rim and/or in a corresponding tire of the wheel;
obtain wheel-assembly information comprising a predetermined location of the wheel and a predetermined fitting-order of the wheel on the vehicle;
associate the sensor information to the obtained wheel-assembly information.

9. The system according to claim 8, wherein the processing circuitry is further configured to:
generate an assembly label for the wheel based on the associated sensor information to the obtained wheel-assembly information; and
enable identification of the wheel by means of the generated assembly label for the wheel.

10. The system according to any one of the claims 8 or 9, wherein the wheel sensor comprises any one of a Radio Frequency Identification, RFID, tag (114) located on the rim, or in the tire of the wheel and/or a tire sensor (111) comprising a tire pressure sensor mounted on the rim or inside the tire of the wheel.

11. The system according to any one of claims 8 - 10, wherein the processing circuitry is further configured to:
obtain an identification of the chassis of the vehicle (611); wherein the wheel-assembly information further comprises the obtained identification of the chassis of the vehicle; and
obtain the predetermined location of the wheel (613) and the predetermined fitting-order of the wheel in connection to the obtained identification of the chassis.

12. The system according to any one of claims 8 - 11, wherein the processing circuitry is further configured to:
obtain tire-rim information (615) comprising a unique tire-rim combination for the wheel, formed based on an identity of the rim and an identity of the tire of the wheel;
wherein the wheel-assembly information further comprises the tire-rim information.

13. The system according to any one of claims 8 - 12, wherein the processing circuitry is further configured to:
form a first data set (617) by obtaining a predetermined location and a predetermined fitting-order on the vehicle for each wheel of a plurality of wheels to be mounted onto the vehicle; wherein the wheel-assembly information comprises the formed first data set; and
form a second data set (619) by obtaining an identity of a wheel sensor located on a corresponding rim and/or in a corresponding tire of each wheel of the plurality of the wheels; wherein the sensor information comprises the second data set.

14. A tire fitting station configured for enabling identification of a wheel to be mounted onto a vehicle, the tire fitting station comprising a system according to any one of claims 8 - 13.

15. A computer program product comprising instructions which, when the program is executed by one or more processors of a processing circuitry, causes the processing circuitry to carry out the method according to any one of claims 1 - 7.

## Patentansprüche

1. Verfahren, das durch ein Reifenmontagesystem zum Ermöglichen einer Identifikation eines an einem Fahrzeug anzubringenden Rads durchgeführt wird, wobei das Verfahren Folgendes umfasst:
Erlangen von Sensorinformationen, die eine Identität eines Radsensors (111), der sich an einer entsprechenden Felge (112) und/oder in einem entsprechenden Reifen (113) des Rads (110) befindet, umfassen;
Erlangen von Radanordnungsinformationen (603), die eine vorbestimmte Stelle des Rads und eine vorbestimmte Montagereihenfolge des Rads an dem Fahrzeug umfassen; Zuordnen (605) der Sensorinformationen zu den erlangten Radanordnungsinformationen.

2. Verfahren nach Anspruch 1, wobei das Verfahren ferner Folgendes umfasst:
Erzeugen eines Anordnungsetiketts (607) für das Rad basierend auf den zugeordneten Sensorinformationen zu den erlangten Radanordnungsinformationen; und
Ermöglichen einer Identifikation des Rads mittels des erzeugten Anordnungsetiketts für das Rad.

3. Verfahren nach einem der Ansprüche 1 oder 2, wobei der Radsensor ein beliebiges eines Radiofrequenzidentifikations-Tags, RFID-Tags, das sich an der Felge oder in dem Reifen des Rads befindet, und/oder eines Reifensensors, der einen Reifendrucksensor (111) umfasst, der an der Felge oder innerhalb des Reifens des Rads angebracht ist, umfasst.

4. Verfahren nach einem der Ansprüche 1-3, wobei das Verfahren ferner Folgendes umfasst:
Erlangen einer Identifikation des Fahrgestells des Fahrzeugs; wobei die Radanordnungsinformationen ferner die erlangte Identifikation des Fahrgestells des Fahrzeugs (611) umfassen; und
Erlangen der vorbestimmten Stelle des Rads (613) und der vorbestimmten Montagereihenfolge des Rads in Verbindung mit der erlangten Identifikation des Fahrgestells.

5. Verfahren nach einem der vorhergehenden Ansprüche, wobei die vorbestimmte Stelle des Rads an dem Fahrgestell mindestens einer vorbestimmten Stelle einer entsprechenden Achse an dem Fahrgestell des Fahrzeugs, an dem das Rad anzubringen ist, entspricht und die vorbestimmte Montagereihenfolge des Rads an dem Fahrgestell eine Anordnungsreihenfolge des Rads an der vorbestimmten Stelle seiner entsprechenden Achse an dem Fahrgestell des Fahrzeugs angibt.

6. Verfahren nach einem der vorhergehenden Ansprüche, wobei das Verfahren ferner Folgendes umfasst:
Erlangen von Reifenfelgeninformationen (615), die eine eindeutige Reifenfelgenkombination für das Rad, die basierend auf einer Identität der Felge und einer Identität des Reifens des Rads gebildet wird, umfassen;
wobei die Radanordnungsinformationen ferner die Reifenfelgeninformationen umfassen.

7. Verfahren nach einem der vorhergehenden Ansprüche, wobei das Verfahren ferner Folgendes umfasst:
Bilden eines ersten Datensatzes (617) durch Erlangen einer vorbestimmten Stelle und einer vorbestimmten Montagereihenfolge an dem Fahrzeug für jedes Rad einer Vielzahl von an dem Fahrzeug anzubringenden Rädern; wobei die Radanordnungsinformationen den gebildeten ersten Datensatz umfassen; und
Bilden eines zweiten Datensatzes (619) durch Erlangen einer Identität eines Radsensors, der sich an einer entsprechenden Felge und/oder in einem entsprechenden Reifen jedes Rads der Vielzahl der Räder befindet; wobei die Sensorinformationen den zweiten Datensatz umfassen.

8. System zum Ermöglichen einer Identifikation eines an einem Fahrzeug anzubringenden Rads, wobei das System eine Verarbeitungsschaltung (403, 404, 407) umfasst, die zu Folgendem konfiguriert ist:
Erlangen von Sensorinformationen, die eine Identität eines Radsensors, der sich an einer entsprechenden Felge und/oder in einem entsprechenden Reifen des Rads befindet, umfassen;
Erlangen von Radanordnungsinformationen, die eine vorbestimmte Stelle des Rads und eine vorbestimmte Montagereihenfolge des Rads an dem Fahrzeug umfassen;
Zuordnen der Sensorinformationen zu den erlangten Radanordnungsinformationen.

9. System nach Anspruch 8, wobei die Verarbeitungsschaltung ferner zu Folgendem konfiguriert ist:
Erzeugen eines Anordnungsetiketts für das Rad basierend auf den zugeordneten Sensorinformationen zu den erlangten Radanordnungsinformationen; und
Ermöglichen einer Identifikation des Rads mittels des erzeugten Anordnungsetiketts für das Rad.

10. System nach einem der Ansprüche 8 oder 9, wobei der Radsensor ein beliebiges eines Radiofrequenzidentifikations-Tags, RFID-Tags (114), das sich an der Felge oder in dem Reifen des Rads befindet, und/oder eines Reifensensors (111), der einen Reifendrucksensor umfasst, der an der Felge oder innerhalb des Reifens des Rads angebracht ist, umfasst.

11. System nach einem der Ansprüche 8-10, wobei die Verarbeitungsschaltung ferner zu Folgendem konfiguriert ist:
Erlangen einer Identifikation des Fahrgestells des Fahrzeugs (611);
wobei die Radanordnungsinformationen ferner die erlangte Identifikation des Fahrgestells des Fahrzeugs umfassen; und
Erlangen der vorbestimmten Stelle des Rads (613) und der vorbestimmten Montagereihenfolge des Rads in Verbindung mit der erlangten Identifikation des Fahrgestells.

12. System nach einem der Ansprüche 8-11, wobei die Verarbeitungsschaltung ferner zu Folgendem konfiguriert ist:
Erlangen von Reifenfelgeninformationen (615), die eine eindeutige Reifenfelgenkombination für das Rad, die basierend auf einer Identität der Felge und einer Identität des Reifens des Rads gebildet wird, umfassen; wobei die Radanordnungsinformationen ferner die Reifenfelgeninformationen umfassen.

13. System nach einem der Ansprüche 8-12, wobei die Verarbeitungsschaltung ferner zu Folgendem konfiguriert ist:
Bilden eines ersten Datensatzes (617) durch Erlangen einer vorbestimmten Stelle und einer vorbestimmten Montagereihenfolge an dem Fahrzeug für jedes Rad einer Vielzahl von an dem Fahrzeug anzubringenden Rädern; wobei die Radanordnungsinformationen den gebildeten ersten Datensatz umfassen; und
Bilden eines zweiten Datensatzes (619) durch Erlangen einer Identität eines Radsensors, der sich an einer entsprechenden Felge und/oder in einem entsprechenden Reifen jedes Rads der Vielzahl der Räder befindet; wobei die Sensorinformationen den zweiten Datensatz umfassen.

14. Reifenmontagestation, die zum Ermöglichen einer Identifikation eines an einem Fahrzeug anzubringenden Rads konfiguriert ist, wobei die Reifenmontagestation ein System nach einem der Ansprüche 8-13 umfasst.

15. Computerprogrammprodukt, umfassend Anweisungen, die, wenn das Programm durch einen oder mehrere Prozessoren einer Verarbeitungsschaltung ausgeführt wird, die Verarbeitungsschaltung dazu veranlassen, das Verfahren nach einem der Ansprüche 1-7 auszuführen.

## Revendications

1. Procédé réalisé par un système de montage de pneu pour la permission d'une identification d'une roue à monter sur un véhicule, le procédé comprenant :
l'obtention d'informations de capteur comprenant une identité d'un capteur de roue (111) situé sur une jante correspondante (112) et/ou dans un pneu correspondant (113) de la roue (110) ;
l'obtention d'informations d'assemblage de roue (603) comprenant un emplacement prédéterminé de la roue et un ordre de montage prédéterminé de la roue sur le véhicule ; l'association (605) des informations de capteur aux informations d'assemblage de roue obtenues.

2. Procédé selon la revendication 1, dans lequel le procédé comprend en outre :
la génération d'une étiquette d'assemblage (607) pour la roue sur la base des informations de capteur associées aux informations d'assemblage de roue obtenues ; et
la permission d'une identification de la roue au moyen de l'étiquette d'assemblage générée pour la roue.

3. Procédé selon l'une quelconque parmi la revendication 1 ou la revendication 2, dans lequel le capteur de roue comprend l'une quelconque parmi une étiquette d'identification par radiofréquence, RFID, située sur la jante, ou dans le pneu de la roue et/ou un capteur de pneu comprenant un capteur de pression de pneu (111) monté sur la jante ou à l'intérieur du pneu de la roue.

4. Procédé selon l'une quelconque des revendications 1 à 3, dans lequel le procédé comprend en outre :
l'obtention d'une identification du châssis du véhicule ; dans lequel les informations d'assemblage de roue comprennent en outre l'identification obtenue du châssis du véhicule (611) ; et
l'obtention de l'emplacement prédéterminé de la roue (613) et de l'ordre de montage prédéterminé de la roue en connexion avec l'identification obtenue du châssis.

5. Procédé selon l'une quelconque des revendications précédentes, dans lequel l'emplacement prédéterminé de la roue sur le châssis correspond au moins à un emplacement prédéterminé d'un essieu correspondant sur le châssis du véhicule sur lequel la roue doit être montée et l'ordre de montage prédéterminé de la roue sur le châssis est indicatif d'un ordre d'assemblage de la roue sur l'emplacement prédéterminé de son essieu correspondant sur le châssis du véhicule.

6. Procédé selon l'une quelconque des revendications précédentes, dans lequel le procédé comprend en outre :
l'obtention d'informations de pneu-jante (615) comprenant une combinaison pneu-jante unique pour la roue, formée sur la base d'une identité de la jante et d'une identité du pneu de la roue ;
dans lequel les informations d'assemblage de roue comprennent en outre les informations de pneu-jante.

7. Procédé selon l'une quelconque des revendications précédentes, dans lequel le procédé comprend en outre :
la formation d'un premier ensemble de données (617) par l'obtention d'un emplacement prédéterminé et d'un ordre de montage prédéterminé sur le véhicule pour chaque roue d'une pluralité de roues à monter sur le véhicule ; dans lequel les informations d'assemblage de roue comprennent le premier ensemble de données formé ; et
la formation d'un second ensemble de données (619) par l'obtention d'une identité d'un capteur de roue situé sur une jante correspondante et/ou dans un pneu correspondant de chaque roue de la pluralité des roues ; dans lequel les informations de capteur comprennent le second ensemble de données.

8. Système pour la permission d'une identification d'une roue à monter sur un véhicule, le système comprenant une circuiterie de traitement (403, 404, 407) configurée pour :
l'obtention d'informations de capteur comprenant une identité d'un capteur de roue situé sur une jante correspondante et/ou dans un pneu correspondant de la roue ;
l'obtention d'informations d'assemblage de roue comprenant un emplacement prédéterminé de la roue et un ordre de montage prédéterminé de la roue sur le véhicule ;
l'association des informations de capteur aux informations d'assemblage de roue obtenues.

9. Système selon la revendication 8, dans lequel la circuiterie de traitement est en outre configurée pour :
la génération d'une étiquette d'assemblage pour la roue sur la base des informations de capteur associées aux informations d'assemblage de roue obtenues ; et
la permission d'une identification de la roue au moyen de l'étiquette d'assemblage générée pour la roue.

10. Système selon l'une quelconque parmi la revendication 8 ou la revendication 9, dans lequel le capteur de roue comprend l'une quelconque parmi une étiquette d'identification par radiofréquence, RFID, (114) située sur la jante, ou dans le pneu de la roue et/ou un capteur de pneu (111) comprenant un capteur de pression de pneu monté sur la jante ou à l'intérieur du pneu de la roue.

11. Système selon l'une quelconque des revendications 8 à 10, dans lequel la circuiterie de traitement est en outre configurée pour :
l'obtention d'une identification du châssis du véhicule (611) ;
dans lequel les informations d'assemblage de roue comprennent en outre l'identification obtenue du châssis du véhicule ; et
l'obtention de l'emplacement prédéterminé de la roue (613) et de l'ordre de montage prédéterminé de la roue en connexion avec l'identification obtenue du châssis.

12. Système selon l'une quelconque des revendications 8 à 11, dans lequel la circuiterie de traitement est en outre configurée pour :
l'obtention d'informations de pneu-jante (615) comprenant une combinaison pneu-jante unique pour la roue, formée sur la base d'une identité de la jante et d'une identité du pneu de la roue ; dans lequel les informations d'assemblage de roue comprennent en outre les informations de pneu-jante.

13. Système selon l'une quelconque des revendications 8 à 12, dans lequel la circuiterie de traitement est en outre configurée pour :
la formation d'un premier ensemble de données (617) par l'obtention d'un emplacement prédéterminé et d'un ordre de montage prédéterminé sur le véhicule pour chaque roue d'une pluralité de roues à monter sur le véhicule ; dans lequel les informations d'assemblage de roue comprennent le premier ensemble de données formé ; et
la formation d'un second ensemble de données (619) par l'obtention d'une identité d'un capteur de roue situé sur une jante correspondante et/ou dans un pneu correspondant de chaque roue de la pluralité des roues ; dans lequel les informations de capteur comprennent le second ensemble de données.

14. Station de montage de pneu configurée pour la permission d'une identification d'une roue à monter sur un véhicule, la station de montage de pneu comprenant un système selon l'une quelconque des revendications 8 à 13.

15. Produit programme informatique comprenant des instructions qui, lorsque le programme est exécuté par un ou plusieurs processeurs d'une circuiterie de traitement, amènent la circuiterie de traitement à réaliser le procédé selon l'une quelconque des revendications 1 à 7.
